# EUROPEAN PATENT SPECIFICATION

(11) **EP 3 278 950 B1**
(45) Date of publication and mention of the grant of the patent: **01.12.2021**
(21) Application number: 16768761.5
(22) Date of filing: 22.03.2016
(51) Int. Cl.: B29C 45/60, B29B 7/42, B29C 45/47, B29C 45/54, B29C 45/50, B29C 48/65, B29C 48/53

(54) **INJECTION DEVICE AND SCREW**
INJEKTIONSVORRICHTUNG UND SCHNECKE
DISPOSITIF D'INJECTION, ET VIS

(30) Priority: 25.03.2015 JP 2015063131
(43) Date of publication of application: 07.02.2018
(73) Proprietor: Sumitomo Heavy Industries, Ltd., Tokyo 141-6025 (JP)
(72) Inventor: FUKUMURA, Hideo, Yokosuka-shi Kanagawa 237-8555 (JP); ISHIDA, Hironobu, Yokosuka-shi Kanagawa 237-8555 (JP)
(74) Representative: Louis Pöhlau Lohrentz
(86) International application number: PCT/JP2016/058995
(87) International publication number: WO 2016/152858

(56) References cited:
- EP-A1- 0 920 971
- EP-A2- 0 509 264
- DE-A1- 2 222 430
- JP-A- S5 919 133
- JP-A- H07 100 873
- JP-A- 2005 096 119
- JP-A- 2005 131 855
- JP-A- 2006 001 265
- JP-A- 2013 035 234
- JP-B2- 3 157 966
- JP-U- H0 285 119
- JP-U- H0 285 119
- JP-U- S6 190 509
- US-A- 5 004 352

## Description

### Technical Field

The present invention relates to an injection unit and a screw.

### Background Art

An injection unit fills a cavity of a mold unit with a molding material. The injection unit has a cylinder which heats the molding material, and a screw which is rotatably disposed in the cylinder. The screw has a rotary shaft, and a helical flight which protrudes from the outer periphery of the rotary shaft. A helical groove is formed by the flight, and the molding material is fed to an upstream portion of the groove. The injection unit feeds the molding material from the upstream side to the downstream side along the rotary shaft by rotating the rotary shaft (refer to, for example, PTL 1). PTL 2 discloses a plasticizing screw for an injection molding machine having one or more lands in a crest portion of a screw flight to prevent the screw flight from coming into contact with a cylinder wall surface when the plasticizing screw is rotated during a molding operation. PTL 3 discloses a shape of a plasticizing screw for an injection molding machine. PTL 4 discloses a thermoplastic resin molding screw which suppresses local shearing heat generation and improves mixing performance by applying a mixing method through extension flow to the screw. PTL 5 discloses a molding machine equipped with a screw which is intermittently and/or periodically rotatable to plasticate a resin.

### Citation List

### Patent Literature

[PTL 1] Japanese Unexamined Patent Application Publication No. 2013-256062
[PTL 2] United States Patent No. 5,004,352
[PTL 3] Japanese Unexamined Utility Model Application Publication No. H02-85119
[PTL 4] Japanese Unexamined Patent Application Publication No. 2006-001265
[PTL 5] European Unexamined Patent Application Publication No. 0 509 264

### Summary of Invention

### Technical Problem

In the related art, there is a case where during molding, whirling of the screw occurs and excessive friction occurs between the screw and the cylinder.

The present invention has been made in view of the above problem and has a main object to provide an injection unit in which whirling of a screw is suppressed and the friction between the screw and a cylinder is reduced.

### Solution to Problem

In order to solve the above problem, according to an aspect of the present invention, there is provided an injection unit including: a cylinder which heats a molding material; and a screw which is rotatably disposed in the cylinder, in which the screw has a rotary shaft, a helical flight which protrudes from an outer periphery of the rotary shaft, and a helical partition flight which partitions a groove which is formed by the flight, and feeds the molding material from an upstream side to a downstream side along the rotary shaft by rotation of the rotary shaft, the flight has a different diameter flight portion in which a height of a downstream-side end portion of a top is lower than a height of an upstream-side end portion of the top, an upstream end of the partition flight is disposed on the further upstream side with respect to a downstream end of the different diameter flight portion, and the upstream end of the partition flight is disposed on the further upstream side with respect to an upstream end of the different diameter flight portion. Advantageous Effects of Invention

According to the aspect of the present invention, an injection unit is provided in which whirling of a screw is suppressed and the friction between the screw and a cylinder is reduced.

### Brief Description of Drawings

FIG. 1 is a diagram showing an injection unit according to an embodiment.
FIG. 2 is a diagram showing a part of a screw according to the embodiment in an enlarged manner.
FIG. 3 is a diagram showing an injection unit according to a modification example.
FIG. 4 is diagram showing a part of a screw according to the modification example in an enlarged manner.

### Description of Embodiments

Hereinafter, a mode for carrying out the present invention will be described with reference to the drawings. In each of the drawings, identical or corresponding configurations will be denoted by identical or corresponding reference numerals, and description thereof will be omitted.

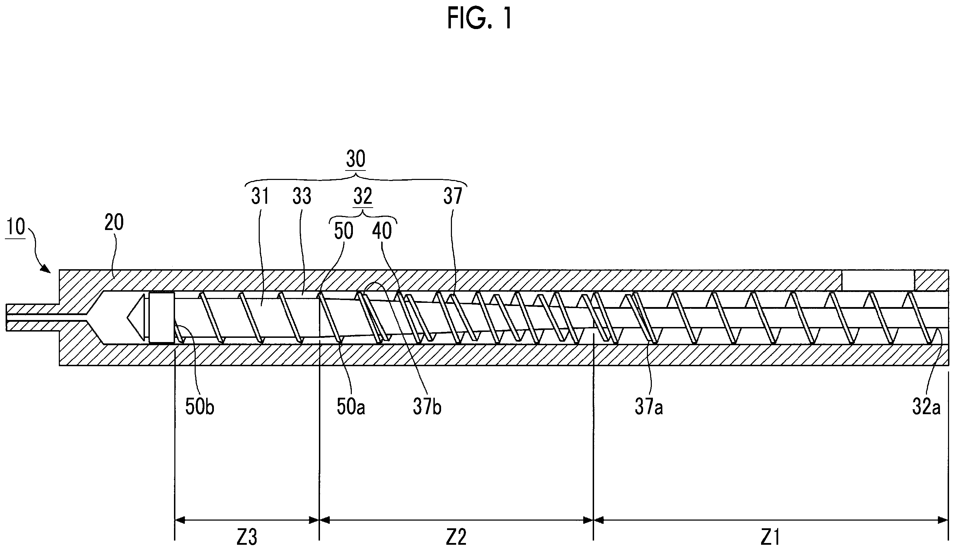

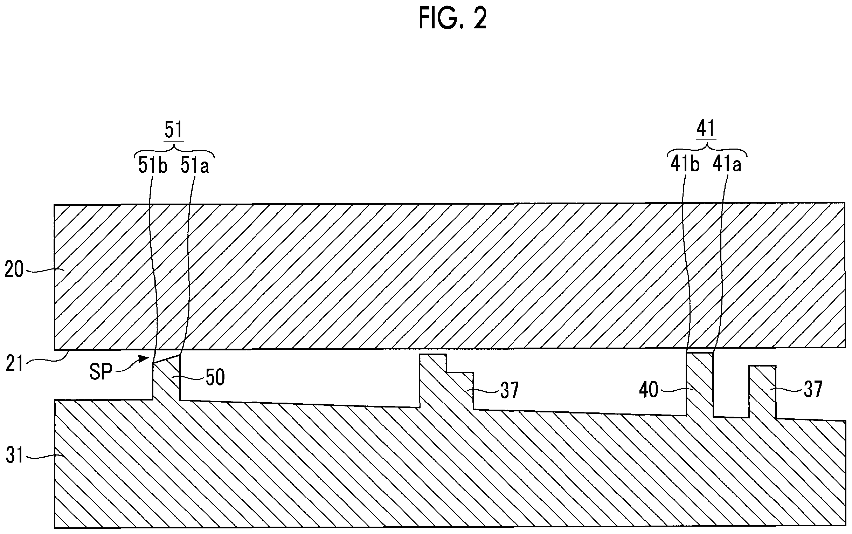

FIG. 1 is a diagram showing an injection unit according to an embodiment. FIG. 2 is a diagram showing a part of a screw according to the embodiment in an enlarged manner.

An injection unit 10 fills a cavity of a mold unit with a molding material. The injection unit 10 has a cylinder 20 which heats the molding material, and a screw 30 which is disposed in the cylinder 20 so as to be rotatable and be able to advance and retreat. The screw 30 has a rotary shaft 31, and a helical flight 32 which protrudes from the outer periphery of the rotary shaft 31. A helical groove 33 is formed by the flight 32, and a solid phase molding material is fed to an upstream portion of the groove 33.

The injection unit 10 feeds the molding material from the upstream side (the right side in the drawing) to the downstream side (the left side in the drawing) along the rotary shaft 31 by rotating the rotary shaft 31. In the meantime, the molding material is gradually melted by the heat from the cylinder 20. The screw 30 retreats as a liquid phase molding material is fed forward of the screw 30 (to the further downstream side with respect to the screw 30) and accumulated in a front portion of the cylinder 20. If the screw 30 retreats to a predetermined position and a predetermined amount of molding material is accumulated in front of the screw 30, the injection unit 10 stops the rotation of the screw 30.

The injection unit 10 feeds the molding material accumulated in front of the screw 30 to the cavity of the mold unit by advancing the screw 30. The liquid phase molding material fed to the cavity is cooled and solidified, so that a molding product is obtained.

The screw 30 has a first section Z1, a second section Z2, and a third section Z3 in this order from the upstream side to the downstream side. The first section Z1 is a section in which the solid phase of the molding material is present. The second section Z2 is a section in which both the solid phase and the liquid phase of the molding material are present. The third section Z3 is a section in which the liquid phase of the molding material is present.

The depth of the groove 33 is deep in the first section Z1, is shallow in the third section Z3, and becomes shallower as it goes toward the downstream side from the upstream side in the second section Z2. In this case, the first section Z1 is also referred to as a feed zone, the second section Z2 is also referred to as a compression zone, and the third section Z3 is also referred to as a metering zone.

The depth of the groove 33 may be constant.

The flight 32 has a different diameter flight portion 50 in which the height of a downstream-side end portion 51b of a top 51 (refer to FIG. 2) is lower than the height of an upstream-side end portion 51a of the top 51. Here, the height is based on the center line of the rotary shaft 31. A gap SP is formed between the top 51 of the different diameter flight portion 50 and an inner wall surface 21 of the cylinder 20.

The top 51 of the different diameter flight portion 50 is formed in a tapered shape in which the height continuously decreases as it goes toward the downstream-side end portion 51b from the upstream-side end portion 51a. The width of the gap SP increases as it goes toward the downstream-side end portion 51b from the upstream-side end portion 51a. The liquid phase molding material enters the gap SP, whereby a restoring force for suppressing whirling of the screw 30 is obtained.

The top 51 of the different diameter flight portion 50 is formed in a tapered shape in which the height continuously decreases as it goes toward the downstream-side end portion 51b from the upstream-side end portion 51a. However, the top 51 of the different diameter flight portion 50 may be formed in a stepped land shape in which the height decreases in a stepwise fashion, or may be formed in a tapered land shape in which the height is the same from the upstream-side end portion 51a to the middle toward the downstream-side end portion 51b and the height continuously decreases from the middle to the downstream-side end portion 51b. Even in these cases, the restoring force is obtained.

Incidentally, the restoring force is obtained by the liquid phase molding material entering the gap SP, as described above.

Therefore, in order to obtain a high restoring force, the flight 32 may have the different diameter flight portion 50 in the third section Z3 in which most molding materials are in the liquid phase. In the third section Z3, there is almost no solid phase molding material.

The flight 32 may have the different diameter flight portion 50 in the second section Z2, in addition to the third section Z3. The flight 32 may not have the different diameter flight portion 50 in the first section Z1 in which there is almost no liquid phase molding material.

The flight 32 may have a same diameter flight portion 40 having the same height from an upstream-side end portion 41a of a top 41 (refer to FIG. 2) to a downstream-side end portion 41b of the top 41 and provided on the further upstream side with respect to the different diameter flight portion 50, as shown in FIG. 1. The same diameter flight portion 40 may be continuously connected to the different diameter flight portion 50.

The same diameter flight portion 40 is disposed on the upstream side of the different diameter flight portion 50. For this reason, in the section of the same diameter flight portion 40, the proportion of the liquid phase in the molding material is smaller than that in the section of the different diameter flight portion 50. The same diameter flight portion 40 is disposed in a section in which improvement in restoring force cannot be expected.

The top 41 of the same diameter flight portion 40 is parallel to the inner wall surface 21 of the cylinder 20, and therefore, when it comes into contact with the inner wall surface 21 of the cylinder 20, the contact pressure thereof can be further reduced than that in the top 51 of the different diameter flight portion 50.

The flight 32 may have the same diameter flight portion 40 in the first section Z1 in which there is almost no liquid phase molding material. The flight 32 may also have the same diameter flight portion 40 in the second section Z2, in addition to the first section Z1.

The boundary between the same diameter flight portion 40 and the different diameter flight portion 50 may not be related to the boundary between the first section Z1 and the second section Z2 or the boundary between the second section Z2 and the third section Z3 and may be in the middle of the second section Z2, as shown in FIG. 1, for example.

Incidentally, in order to improve the restoring force, it is effective to reduce the proportion of the solid phase in the molding material in the groove which is formed by the different diameter flight portion 50 and increase the proportion of the liquid phase in the molding material.

Therefore, the screw 30 has a helical partition flight 37 which partitions the groove 33 which is formed by the flight 32. On the further downstream side with respect to an upstream end 37a of the partition flight 37, the proportion of the solid phase in the molding material decreases and the proportion of the liquid phase in the molding material increases.

The upstream end 37a of the partition flight 37 is disposed on the further upstream side with respect to a downstream end 50b of the different diameter flight portion 50, as shown in FIG. 1. In this way, in the groove which is formed by the different diameter flight portion 50, the proportion of the solid phase in the molding material decreases and the proportion of the liquid phase in the molding material increases. Accordingly, the restoring force can be improved and the friction between the screw 30 and the cylinder 20 can be reduced.

The upstream end 37a of the partition flight 37 may be disposed on the further upstream side with respect to an upstream end 50a of the different diameter flight portion 50. That is, the upstream end 50a of the different diameter flight portion 50 may be disposed on the further downstream side with respect to the upstream end 37a of the partition flight 37. In the groove which is formed by the different diameter flight portion 50, the proportion of the solid phase in the molding material further decreases and the proportion of the liquid phase in the molding material further increases.

The upstream end 37a of the partition flight 37 may be disposed on the further downstream side with respect to an upstream end 32a of the flight 32. The partition flight 37 is not formed in the vicinity of a molding material feed position, and therefore, the solid phase molding material easily flows. It is possible to suppress a decrease in the flow rate of the molding material due to the partition flight 37.

A downstream end 37b of the partition flight 37 may be disposed on the further upstream side with respect to the downstream end 50b of the different diameter flight portion 50. In the vicinity of the downstream end 50b of the different diameter flight portion 50, there is almost no solid phase molding material, and therefore, the partition flight 37 may not be formed in the vicinity of the downstream end 50b of the different diameter flight portion 50. It is possible to suppress harmful effects caused by the partition flight 37.

The downstream end 37b of the partition flight 37 may be disposed on the further upstream side with respect to the upstream end 50a of the different diameter flight portion 50. A molding material having a sufficiently high proportion of the liquid phase can be fed to the groove which is formed by the different diameter flight portion 50.

The screw 30 may have the partition flight 37 in the second section Z2 in which both the solid phase molding material and the liquid phase molding material are present. The screw 30 may also have the partition flight 37 in the first section Z1.

The partition flight 37 is formed in the first section Z1 and the second section Z2 and may not be formed in the third section Z3, similar to the same diameter flight portion 40. For this reason, the top of the partition flight 37 may have the same height from an upstream-side end portion to a downstream-side end portion, similar to the top 41 of the same diameter flight portion 40.

The partition flight 37 may be formed in the third section Z3 or may also be formed in all the sections. In this case, the partition flight 37 may have a different diameter flight portion, in which the height of a downstream-side end portion of the top is lower than the height of an upstream-side end portion of the top, in the third section Z3, similar to the flight 32.

The pitch of the partition flight 37 is wider than the pitch of the flight 32. The partition flight 37 may be continuously connected to the flight 32 at both the upstream end 37a and the downstream end 37b.

The pitch of the partition flight 37 may be smaller than the pitch of the flight 32 or may be the same as the pitch of the flight 32.

The pitch of the partition flight 37 is constant in FIG. 1. However, the pitch of the partition flight 37 may vary or may be an average value. Similarly, the pitch of the flight 32 is constant in FIG. 1. However, the pitch of the flight 32 may vary or may be an average value.

Further, the flight width of the partition flight 37 is constant in FIG. 1. However, the flight width of the partition flight 37 may vary or may be an average value.

The height of the partition flight 37 may be lower than the height of the flight 32 (specifically, the same diameter flight portion 40), as shown in FIG. 2. The contact between the partition flight 37 and the cylinder 20 can be prevented. The height of the partition flight 37 may be the same as the height of the flight 32.

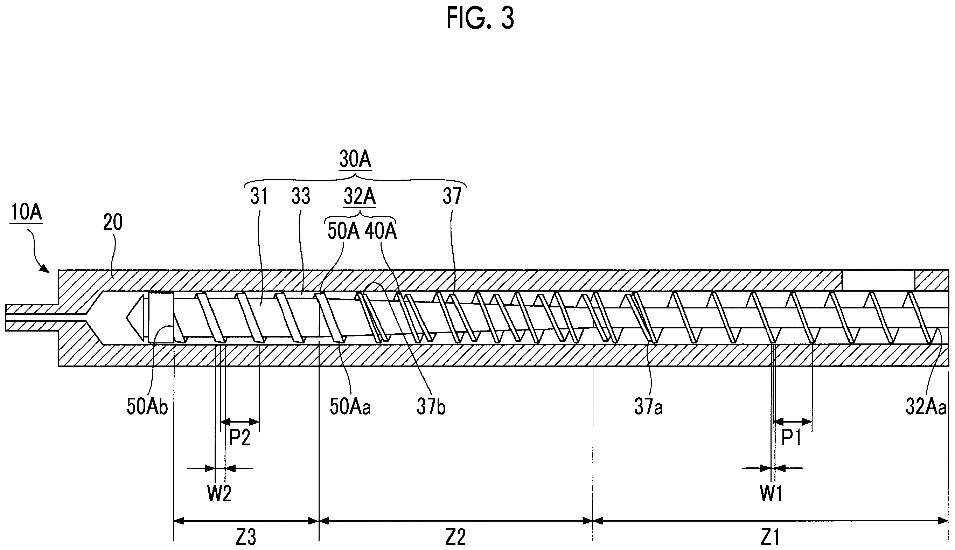

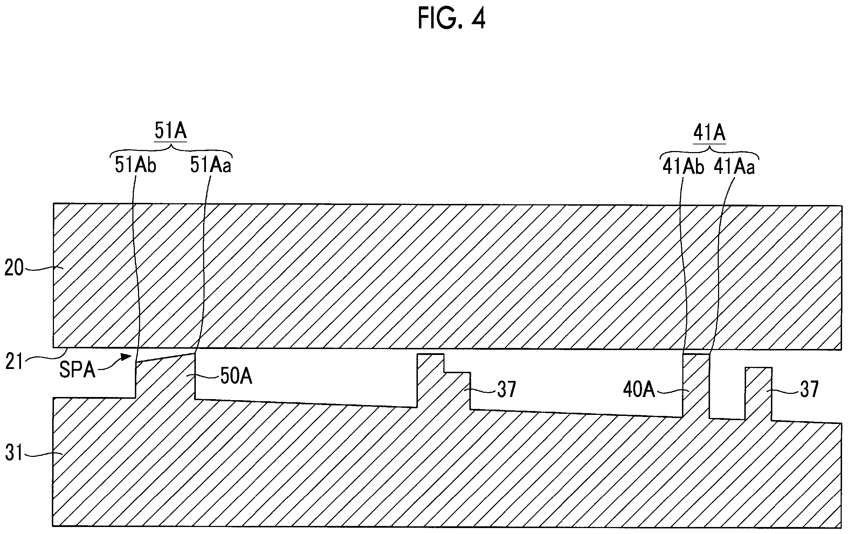

FIG. 3 is a diagram showing an injection unit according to a modification example. FIG. 4 is diagram showing a part of a screw according to the modification example in an enlarged manner. An injection unit 10A has a screw 30A instead of the screw 30. The screw 30A has a flight 32A instead of the flight 32.

The flight 32A has a helical first flight portion 40A and a helical second flight portion 50A which is disposed on the downstream side of the first flight portion 40A. Although it will be described in detail later, at least one of the pitch and the flight width is different between the first flight portion 40A and the second flight portion 50A, and the ratio of the flight width to the pitch is different between the first flight portion 40A and the second flight portion 50A.

The second flight portion 50A is a different diameter flight portion in which the height of a downstream-side end portion 51Ab of a top 51A is lower than the height of an upstream-side end portion 51Aa of the top 51A. A gap SPA is formed between the top 51A of the second flight portion 50A and the inner wall surface 21 of the cylinder 20.

The top 51A of the second flight portion 50A is formed in a tapered shape in which the height continuously decreases as it goes toward the downstream-side end portion 51Ab from the upstream-side end portion 51Aa. The width of the gap SPA increases as it goes toward the downstream-side end portion 51Ab from the upstream-side end portion 51Aa. The liquid phase molding material enters the gap SPA, whereby a restoring force for suppressing whirling of the screw 30A is obtained.

The top 51A of the second flight portion 50A is formed in a tapered shape. However, the top 51A of the second flight portion 50A may be formed in a stepped land shape or may be formed in a tapered land shape. Even in these cases, the restoring force is obtained.

Incidentally, the restoring force is obtained by the liquid phase molding material entering the gap SPA, as described above.

In order to obtain a high restoring force, the flight 32A may have the second flight portion 50A in the third section Z3 in which most molding materials are in the liquid phase. In the third section Z3, there is almost no solid phase molding material.

The flight 32A may have the second flight portion 50A in the second section Z2, in addition to the third section Z3. The flight 32A may not have the second flight portion 50A in the first section Z1 in which there is almost no liquid phase molding material.

The ratio W2/P2 (hereinafter referred to as a "second ratio W2/P2") of a flight width W2 of the second flight portion 50A to a pitch P2 of the second flight portion 50A is larger than the ratio W1/P1 (hereinafter referred to as a "first ratio W1/P1") of a flight width W1 of the first flight portion 40A to a pitch P1 of the first flight portion 40A. The second flight portion 50A is more densely formed than in a case where the second ratio W2/P2 is the same as the first ratio W1/P1, and thus a higher restoring force is obtained.

For example, the pitch P2 of the second flight portion 50A and the pitch P1 of the first flight portion 40A are the same and the flight width W2 of the second flight portion 50A is larger than the flight width W1 of the first flight portion 40A. In this case, the second ratio W2/P2 is larger than the first ratio W1/P1, and thus the second flight portion 50A is densely formed, so that a high restoring force is obtained.

A configuration is also possible in which the flight width W2 of the second flight portion 50A and the flight width W1 of the first flight portion 40A are the same and the pitch P2 of the second flight portion 50A is smaller than the pitch P1 of the first flight portion 40A. Even in this case, the second ratio W2/P2 is larger than the first ratio W1/P1, and thus the second flight portion 50A is densely formed, so that a high restoring force is obtained.

A configuration is also possible in which the pitch P2 of the second flight portion 50A is smaller than the pitch P1 of the first flight portion 40A and the flight width W2 of the second flight portion 50A is larger than the flight width W1 of the first flight portion 40A. Even in this case, the second ratio W2/P2 is larger than the first ratio W1/P1, and thus the second flight portion 50A is densely formed, so that a high restoring force is obtained.

The pitch P2 of the second flight portion 50A is constant in FIG. 3. However, the pitch P2 of the second flight portion 50A may vary or may be an average value. Similarly, the pitch P1 of the first flight portion 40A is constant in FIG. 3. However, the pitch P1 of the first flight portion 40A may vary or may be an average value.

Further, the flight width W2 of the second flight portion 50A is constant in FIG. 3. However, the flight width W2 of the second flight portion 50A may vary or may be an average value. Similarly, the flight width W1 of the first flight portion 40A is constant in FIG. 3. However, the flight width W1 of the first flight portion 40A may vary or may be an average value.

The first flight portion 40A is disposed on the upstream side of the second flight portion 50A. The first flight portion 40A is continuous with the second flight portion 50A in FIG. 3. However, the first flight portion 40A may be spaced apart from the second flight portion 50A and connected to the second flight portion 50A through a third flight portion.

The first flight portion 40A is disposed on the upstream side of the second flight portion 50A. For this reason, in the section of the first flight portion 40A, the proportion of the liquid phase in the molding material is smaller than that in the section of the second flight portion 50A. Accordingly, the first flight portion 40A may not be a different diameter flight portion, unlike the second flight portion 50A.

The first flight portion 40A may be a same diameter flight portion having the same height from an upstream-side end portion 41Aa of a top 41A to a downstream-side end portion 41Ab of the top 41A, as shown in FIG. 4. The top of the same diameter flight portion is parallel to the inner wall surface 21 of the cylinder 20, and therefore, when it comes into contact with the inner wall surface 21 of the cylinder 20, the contact pressure thereof can be further reduced than that in the top of the different diameter flight portion.

In a case where the first flight portion 40A is the same diameter flight portion, the flight 32A may have the first flight portion 40A in the first section Z1 in which there is almost no liquid phase molding material. The flight 32A may have the first flight portion 40A in the second section Z2, in addition to the first section Z1.

The embodiment of the injection unit has been described above. However, the present invention is not limited to the embodiment described above, and various modifications and improvements can be made within the scope of the appended claims.

For example, the injection unit 10 of the embodiment described above or the injection unit 10A of the modification example is of an in-line screw type, but may be a pre-plasticizing type. A pre-plasticizing type injection unit feeds a molding material melted in a plasticizing cylinder to an injection cylinder and injects the molding material from the injection cylinder into a mold unit. A screw is disposed in the plasticizing cylinder so as to be rotatable or to be rotatable and be able to advance and retreat, and a plunger is disposed in the injection cylinder so as to be able to advance and retreat. In the case of the pre-plasticizing type, the plasticizing cylinder corresponds to the cylinder stated in the claims.

- 10:: injection unit
- 20:: cylinder
- 30:: screw
- 31:: rotary shaft
- 32:: flight
- 33:: groove
- 37:: partition flight
- 40:: same diameter flight portion
- 41:: top
- 50:: different diameter flight portion
- 51:: top

## Claims

1. An injection unit (10) comprising:
a cylinder (20) which heats a molding material; and
a screw (30) which is rotatably disposed in the cylinder (20),
wherein the screw (30) includes a rotary shaft (31), a helical flight (32) which protrudes from an outer periphery of the rotary shaft (31), and a helical partition flight (37) which partitions a groove (33) which is formed by the flight (32), and feeds the molding material from an upstream side to a downstream side along the rotary shaft (31) by rotation of the rotary shaft (31),
the flight includes a different diameter flight portion (50) in which a height of a downstream-side end portion (51b) of a top (51) is lower than a height of an upstream-side end portion (51a) of the top (51),
an upstream end (37a) of the partition flight (37) is disposed on the further upstream side with respect to a downstream end (50b) of the different diameter flight (50) portion, **characterized in that**
the upstream end (37a) of the partition flight (37) is disposed on the further upstream side with respect to an upstream end (50a) of the different diameter flight portion (50).

2. The injection unit (10) according to claim 1, wherein the upstream end (37a) of the partition flight (37) is disposed on the further downstream side with respect to an upstream end (32a) of the flight (32).

3. The injection unit (10) according to claim 1 or 2, wherein a downstream end (37b) of the partition flight (37) is disposed on the further upstream side with respect to the downstream end (50b) of the different diameter flight portion (50) .

4. The injection unit (10) according to any one of claims 1 to 3, wherein the downstream end (37b) of the partition flight (37) is disposed on the further upstream side with respect to the upstream end (50a) of the different diameter flight portion (50) .

5. The injection unit (10) according to any one of claims 1 to 4, wherein the flight (32) includes a same diameter flight portion (40) having the same height from an upstream-side end portion (41a) of a top (41) to a downstream-side end portion (41b) of the top (41) and provided on the further upstream side with respect to the different diameter flight portion (50).

6. The injection unit (10) according to any one of claims 1 to 5, wherein the flight (32) includes a helical first flight portion (Z1), and a helical second flight portion (Z2) which is disposed on the further downstream side with respect to the first flight portion (Z1),
the second flight portion (Z2) is the different diameter flight portion (50), and
the ratio of a flight width of the second flight portion (Z2) to a pitch of the second flight portion (Z2) is larger than the ratio of a flight width of the first flight portion (Z1) to a pitch of the first flight portion (Z1).

7. The injection unit (10) according to claim 6, wherein the flight width of the second flight portion (Z2) is larger than the flight width of the first flight portion (Z1).

8. The injection unit (10) according to claim 6 or 7, wherein the pitch of the second flight portion (Z2) is smaller than the pitch of the first flight portion (Z1).

9. A screw (30) for an injection unit (10) comprising:
a rotary shaft (31);
a helical flight (32) which protrudes from an outer periphery of the rotary shaft (31); and
a helical partition flight (37) which partitions a groove (33) which is formed by the flight (32), and
feeding a molding material from an upstream side to a downstream side along the rotary shaft (31) by rotation of the rotary shaft (31),
wherein the flight (32) includes a different diameter flight portion (50) in which a height of a downstream-side end portion (51b) of a top (51) is lower than a height of an upstream-side end portion (51a) of the top (51),
an upstream end (37a) of the partition flight (37) is disposed on the further upstream side with respect to a downstream end (50b) of the different diameter flight portion (50), **characterized in that**
the upstream end (37a) of the partition flight (37) is disposed on the further upstream side with respect to an upstream end (50a) of the different diameter flight portion (50).

## Patentansprüche

1. Einspritzeinheit (10), umfassend:
einen Zylinder (20), der ein Formmaterial erwärmt; und
eine Schnecke (30), die drehbar in dem Zylinder (20) angeordnet ist,
wobei die Schnecke (30) eine Drehwelle (31), einen helikalen Steg (32), der von einem Außenumfang der Drehwelle (31) vorsteht, und einen helikalen Teilungssteg (37) umfasst, der eine Nut (33), die von dem Steg (32) gebildet wird, teilt, und der das Formmaterial durch Drehung der Drehwelle (31) von einer Stromaufwärtsseite zu einer Stromabwärtsseite entlang der Drehwelle (31) fördert,
der Steg einen Stegabschnitt abweichenden Durchmessers (50) umfasst, bei dem eine Höhe eines stromabwärtsseitigen Endabschnitts (51b) einer Oberseite (51) niedriger ist als eine Höhe eines stromaufwärtsseitigen Endabschnitts (51a) der Oberseite (51),
ein stromaufwärtiges Ende (37a) des Teilungsstegs (37) an der Seite weiter stromaufwärts in Bezug auf ein stromabseitiges Ende (50b) des Stegabschnitts (50) abweichenden Durchmessers angeordnet ist, **dadurch gekennzeichnet, dass**
das stromaufwärtige Ende (37a) des Teilungsstegs (37) an der Seite weiter stromaufwärts in Bezug auf ein stromaufwärtiges Ende (50a) des Stegabschnitts (50) abweichenden Durchmessers angeordnet ist.

2. Einspritzeinheit (10) nach Anspruch 1, wobei das stromaufwärtige Ende (37a) des Teilungsstegs (37) an der Seite weiter stromabwärts in Bezug auf ein stromaufwärtiges Ende (32a) des Stegs (32) angeordnet ist.

3. Einspritzeinheit (10) nach Anspruch 1 oder 2, wobei ein stromabwärtiges Ende (37b) des Teilungsstegs (37) an der Seite weiter stromaufwärts in Bezug auf das stromabwärtige Ende (50b) des Stegabschnitts (50) abweichenden Durchmessers angeordnet ist.

4. Einspritzeinheit (10) nach einem der Ansprüche 1 bis 3, wobei das stromabwärtige Ende (37b) des Teilungsstegs (37) an der Seite weiter stromaufwärts in Bezug auf das stromaufwärtige Ende (50a) des Stegabschnitts (50) abweichenden Durchmessers angeordnet ist.

5. Einspritzeinheit (10) nach einem der Ansprüche 1 bis 4, wobei der Steg (32) einen Stegabschnitt (40) gleichen Durchmessers umfasst, der von einem stromaufseitigen Endabschnitt (41a) einer Oberseite (41) zu einem stromabseitigen Endabschnitt (41b) der Oberseite (41) die gleiche Höhe aufweist und an der Seite weiter stromaufwärts in Bezug auf den Stegabschnitt (50) abweichenden Durchmessers vorgesehen ist.

6. Einspritzeinheit (10) nach einem der Ansprüche 1 bis 5, wobei der Steg (32) einen helikalen ersten Stegabschnitt (Z1) und einen helikalen zweiten Stegabschnitt (Z2) umfasst, der in Bezug auf den ersten Stegabschnitt (Z1) an der weiter stromabwärtigen Seite angeordnet ist,
der zweite Stegabschnitt (Z2) der Stegabschnitt (50) abweichenden Durchmessers ist, und
das Verhältnis einer Stegbreite des zweiten Stegabschnitts (Z2) zu einer Steigung des zweiten Stegabschnitts (Z2) größer ist als das Verhältnis einer Stegbreite des ersten Stegabschnitts (Z1) zu einer Steigung des ersten Stegabschnitts (Z1).

7. Einspritzeinheit (10) nach Anspruch 6, wobei die Stegbreite des zweiten Stegabschnitts (Z2) größer ist als die Stegbreite des ersten Stegabschnitts (Z1).

8. Einspritzeinheit (10) nach Anspruch 6 oder 7, wobei die Steigung des zweiten Stegabschnitts (Z2) kleiner ist als die Steigung des ersten Stegabschnitts (Z1).

9. Schnecke (30) für eine Einspritzeinheit (10), umfassend:
eine Drehwelle (31);
einen helikalen Steg (32), der von einem Außenumfang der Drehwelle (31) vorsteht; und
einen helikalen Teilungssteg (37), der eine Nut (33), die von dem Steg (32) gebildet wird, teilt, und
der ein Formmaterial durch Drehung der Drehwelle (31) von einer Stromaufwärtsseite zu einer Stromabwärtsseite entlang der Drehwelle (31) fördert,
wobei der Steg (32) einen Stegabschnitt abweichenden Durchmessers (50) umfasst, bei dem eine Höhe eines stromabwärtsseitigen Endabschnitts (51b) einer Oberseite (51) niedriger ist als eine Höhe eines stromaufwärtsseitigen Endabschnitts (51a) der Oberseite (51),
ein stromaufwärtiges Ende (37a) des Teilungsstegs (37) an der Seite weiter stromaufwärts in Bezug auf ein stromabwärtiges Ende (50b) des Stegabschnitts (50) abweichenden Durchmessers angeordnet ist, **dadurch gekennzeichnet, dass**
das stromaufwärtige Ende (37a) des Teilungsstegs (37) in Bezug auf ein stromaufwärtiges Ende (50a) des Stegabschnitts (50) abweichenden Durchmessers an der weiter stromaufwärtigen Seite angeordnet ist.

## Revendications

1. Une unité d'injection (10) comprenant :
un cylindre (20) qui chauffe un matériau de moulage ; et
une vis (30) qui est disposée en rotation dans le cylindre (20),
dans laquelle la vis (30) comprend un arbre rotatif (31), une spire hélicoïdale (32) qui fait saillie à partir d'une périphérie externe de l'arbre rotatif (31), et une spire de séparation hélicoïdale (37) qui sépare une rainure (33) qui est formée par la spire (32), et amène le matériau de moulage d'un côté en amont à un côté en aval le long de l'arbre rotatif (31) par la rotation de l'arbre rotatif (31),
la spire comprend une partie de spire de diamètre différent (50) dans laquelle une hauteur d'une partie d'extrémité du côté en aval (51b) d'une partie supérieure (51) est plus basse qu'une hauteur d'une partie d'extrémité du côté en amont (51a) de la partie supérieure (51),
une extrémité en aval (37a) de la spire de séparation (37) est disposée sur le côté davantage en amont par rapport à une extrémité en aval (50b) de la partie de spire de diamètre différent (50), **caractérisée en ce que** :
l'extrémité en aval (37a) de la spire de séparation (37) est disposée du côté davantage en amont par rapport à une extrémité en amont (50a) de la partie de spire de diamètre différent (50).

2. L'unité d'injection (10) selon la revendication 1, dans laquelle l'extrémité en amont (37a) de la spire de séparation (37) est disposée sur le côté plus en aval par rapport à l'extrémité en amont (32a) de la spire (32).

3. L'unité d'injection (10) selon la revendication 1 ou 2, dans laquelle une extrémité en aval (37b) de la spire de séparation (37) est disposée sur le côté plus en amont par rapport à l'extrémité en aval (50b) de la partie de spire de diamètre différent (50).

4. L'unité d'injection d'injection (10) selon l'une quelconque des revendications 1 à 3, dans laquelle l'extrémité en aval (37b) de la spire de séparation (37) est disposée sur le côté plus en amont par rapport à l'extrémité en amont (50a) de la partie de spire de diamètre différent (50).

5. L'unité d'injection (10) selon l'une quelconque des revendications 1 à 4, dans laquelle la spire (32) comprend une partie de spire de même diamètre (40) ayant la même hauteur d'une partie d'extrémité du côté en amont (41a) d'une partie supérieure (41) jusqu'à une partie d'extrémité du côté en aval (41b) de la partie supérieure (41) et prévue du côté davantage en amont par rapport à la partie de spire de diamètre différent (50).

6. L'unité d'injection (10) selon l'une quelconque des revendications 1 à 5, dans laquelle la spire (32) comprend une première partie de spire hélicoïdale (Z1), et une seconde partie de spire hélicoïdale (Z2) qui est disposée du côté davantage en aval par rapport à la première partie de spire (Z1),
la seconde partie de spire (Z2) est la partie de spire de diamètre différent (50), et
le rapport d'une largeur de spire de la seconde partie de spire (Z2) sur un pas de la seconde partie de spire (Z2) est supérieur au rapport d'une largeur de spire de la première partie de spire (Z1) sur un pas de la première partie de spire (Z1).

7. L'unité d'injection (10) selon la revendication 6, dans laquelle la largeur de spire de la seconde partie de spire (Z2) est supérieure à la largeur de spire de la première partie de spire (Z1).

8. Unité d'injection (10) selon la revendication 6 ou 7, dans laquelle le pas de la première partie de spire (Z2) est inférieur au pas de la première partie de spire (Z1).

9. Une vis (30) pour une unité d'injection (10) comprenant :
un arbre rotatif (31) ;
une spire hélicoïdale (32) qui fait saillie d'une périphérie externe de l'arbre rotatif (31) ; et
une spire de séparation hélicoïdale (37) qui sépare une rainure (33) qui est formée par la spire (32), et
l'alimentation d'un matériau de moulage d'un côté en amont vers un côté en aval le long de l'arbre rotatif (31) par la rotation de l'arbre rotatif (31),
dans laquelle la spire (32) comprend une partie de spire de diamètre différent (50) dans laquelle une hauteur d'une partie d'extrémité du côté en aval (51b) d'une partie supérieure (51) est inférieure à une hauteur d'une partie d'extrémité du côté en amont (51a) de la partie supérieure (51),
une extrémité en amont (37a) de la spire de séparation (37) est disposée sur le côté davantage en amont par rapport à une extrémité en aval (50b) de la partie de spire de diamètre différent (50), **caractérisée en ce que** :
l'extrémité en amont (37a) de la spire de séparation (37) est disposée sur le côté davantage en amont par rapport à une extrémité en amont (50a) de la partie de spire de diamètre différent (50).
